Europäisches Patentamt

European Patent Office

Office européen des brevets

(11) Veröffentlichungsnummer: **0 026 893**
**A1**

(12) **EUROPÄISCHE PATENTANMELDUNG**

(21) Anmeldenummer: 80105869.4

(22) Anmeldetag: 27.09.80

(51) Int. Cl.³: **C 07 F 9/145**
**// C08K5/52**

(30) Priorität: 06.10.79 DE 2940548

(43) Veröffentlichungstag der Anmeldung: 15.04.81
Patentblatt 81/15

(84) Benannte Vertragsstaaten: **BE CH DE FR GB LI NL**

(71) Anmelder: **HOECHST AKTIENGESELLSCHAFT, Zentrale Patentabteilung Postfach 80 03 20, D-6230 Frankfurt/Main 80 (DE)**

(72) Erfinder: **Häberlein, Harald, Dr., Schlesierstrasse 2, D-8906 Gersthofen (DE)**

(54) **Verfahren zur Herstellung von kristallisiertem Tris-(2-tert.-butylphenyl)-phosphit.**

(57) Durch Behandlung des bisher nur als sirupöse Masse bekannten Tris-(2-tert.-butylphenyl)-phosphits mit bei Raumtemperaturen flüssigen Mono-, Di- oder Etheralkoholen läßt sich dieses Phosphit in Form farbloser Kristalle vom Schmelzpunkt 72,5° C erhalten.

EP 0 026 893 A1

## Kristallisiertes Tris-(2-tert.-butylphenyl)-phosphit und Verfahren zu seiner Herstellung

Die schädigenden Einflüsse von Wärme und Licht auf synthetische Hochpolymere sind allgemein bekannt. In der Praxis begegnet man diesen Erscheinungen durch den Zusatz von Stabilisatoren und stabilisierenden Hilfsstoffen, wobei sich oftmals synergistische Wirkungen erzielen lassen. Zu den gebräuchlisten Costabilisatoren gehören die organischen Phosphite, und unter diesen besitzen die Tri-(alkylaryl)-phosphite ein bevorzugtes Interesse. Besonders gut wirksam sind nach Literaturangaben solche Tri-(alkylaryl)-phosphite, bei denen die Arylreste neben gegebenenfalls weiteren Substituenten einen Alkylrest, vorzugsweise eine tert.-Butylgruppe, in der ortho-Stellung zur C-O-P-Bindung tragen.

Tri-(alkylaryl)-phosphite mit diesen Strukturmerkmalen sind in großer Zahl in der einschlägigen Literatur beschrieben. Auch die einfachste Verbindung dieser Gruppe von Phosphiten, das Tris-(2-tert.-butylphenyl)-phosphit ist in der Patentliteratur mehrfach namentlich oder als Formelbild erwähnt (DE-OS 2 606 358, DE-AS 1 078 138, DE-PS 2 702 661, BE-PS 838 703, US-PS 3 558 554), in keiner der Veröffentlichungen sind jedoch Angaben über physikalische Daten oder chemische Eigenschaften, Herstellung oder Reinigung dieser Verbindung enthalten.

Wie allgemein bekannt ist, kann die Herstellung von aromatischen Estern der phosphorigen Säure beispielsweise erfolgen aus dem entsprechenden Phenol und Phosphortrichlorid bei 20 bis 250 °C entweder ohne Lösungsmittel oder in einem inerten, aprotischen Lösungsmittel in Gegenwart einer organischen Base oder aber durch Umsetzen des Phenols mit Triphenylphosphit ohne Lösungsmittel in Gegenwart einer Base als Katalysator. Zur Herstellung von Tris-(2-tert.-butylphenyl)-phosphit eignet sich - wie eigene Versuche zeigten - nur der erstgenannte Syntheseweg, und das anfallende Reaktionsprodukt ist eine farblose sirupöse Flüssigkeit, die nach mehrtägigem Stehen bei Raumtemperatur allmählich

- 2 -                    0026893

zu einem halbflüssigen Kristallbrei erstarrt.

Stabilisatoren in einer solchen Konsistenz sind jedoch in der Praxis wenig erwünscht. Abgesehen davon, daß die Handhabung und Dosierung umständlich ist, müssen auch die schwankende Qualität, der Gehalt an oft störenden Verunreinigungen sowie die Inhomogenität als Nachteile angesehen werden.

Es hat daher nicht an Versuchen gefehlt, die rohen Reaktionsprodukte zu reinigen, insbesondere durch Behandeln mit gegenüber organischen Phosphiten chemisch inerten Lösungsmitteln, wie aliphatischen und aromatischen Kohlenwasserstoffen, chlorierten Kohlenwasserstoffen, Estern, Ethern und Ketonen, ohne daß jedoch ein Erfolg verzeichnet werden konnte.

Überraschend hat sich jedoch gezeigt, daß beim Zusammengeben der rohen Reaktionsgemische mit Alkoholen das Tris-(2-tert.- butylphenyl)-phosphit spontan und mit großer Reinheit auskristallisiert.

Die vorliegende Erfindung betrifft somit ein Verfahren zur Herstellung von kristallinem Tris-(2-tert.-butylphenyl)-phosphit aus dem nach bekannten Syntheseverfahren anfallenden sirupösen Rohprodukt, welches dadurch gekennzeichnet ist, daß man dieses Rohprodukt mit bei Raumtemperatur flüssigen Alkoholen behandelt.

Daß sich die gestellte Aufgabe in der erfindungsgemäßen Weise lösen lassen würde, war nicht zu erwarten. Gegen den Einsatz von Alkoholen als Kristallisationsmittel bestand nämlich ein Vorurteil dahingehend, daß diese bekanntlich gegenüber Organophosphiten chemisch nicht inert sind und man daher insbesondere bei Anwesenheit von aus der Herstellung des Phosphits stammenden Chlorwasserstoffresten damit rechnen mußte, daß unerwünschte Umesterungsreaktionen stattfinden.

Zur Kristallisation von Tris-(2-tert.-butylphenyl)-phosphit
geeignete Alkohole sind bei Raumtemperatur flüssige Mono- und
Dialkohole sowie Etheralkohole, beispielsweise Methanol, Ethanol,
Propanole, Butanole, Pentanole, Hexanole und Heptanole, Ethylenglykol, Methylglykol, Ethylglykol oder Benzylalkohol. Bevorzugt
werden im allgemeinen die niedriger siedenen Verbindungen mit
Siedepunkten zwischen etwa 65 und ca. 125 °C wegen ihrer leichten
Entfernbarkeit aus dem Kristallisat. Als besonders geeignet
haben sich Monoalkohole mit 1 bis 4 C-Atomen sowie Etheralkohole
mit 1 bis 5 C-Atomen erwiesen.

Das Gewichtsverhältnis von Rohphosphit zu Alkohol liegt bei 1:1
bis 1:10, vorzugsweise bei 1:1 bis 1:6. Im Einzelfall wird es
so gewählt, daß einerseits die Löslichkeitsverluste an Produkt
möglichst niedrig sind, andererseits die resultierende Kristallsuspension sich noch gut rühren läßt und die Abtrennung der
Kristalle von der Mutterlauge keine Schwierigkeiten bereitet.

Zur Durchführung des Verfahrens wird der betreffende Alkohol in
das ca. 40 bis 100 °C warme Rohphosphit eingerührt oder man verfährt auch umgekehrt. Es setzt hierauf eine meist spontane
Kristallisation ein, und das Tris-(2-tert.-butylphenyl)-phosphit
fällt als farbloses Kristallisat aus der Lösung aus. Man isoliert
die Kristalle nach bekannten Methoden, z. B. durch Abfiltrieren,
Absaugen oder Abzentrifugieren, wäscht mit etwas Kristallisationsmittel nach und erhält ein bereits weitestgehend reines Produkt.
Nach dem Umkristallisieren aus z. B. Isopropanol ist es gaschromatographisch rein und besitzt einen Schmelzpunkt von 72,5 °C.

Das erfindungsgemäß erhaltene kristallisierte Tris-(2-tert.-
butylphenyl)-phosphit wird, wie bereits erwähnt, als Stabilisator
für Thermoplaste eingesetzt und läßt sich in dieser Form besonders gut lagern, handhaben und dosieren.

Die folgenden Beispiele sollen die Erfindung noch näher erläutern.

- 4 -                           0026893

### Beispiel 1

137,5 g (1,0 Mol) Phosphortrichlorid werden während 1 Stunde bei 50 °C unter Rühren zu 540 g (3,6 Mol) 2-tert.-Butylphenol getropft. Nach beendeter $PCl_3$-Zugabe wird die Reaktionstemperatur im Verlauf einer weiteren Stunde von 50 auf 150 °C erhöht und danach der Ansatz weitere 5 Stunden bei dieser Temperatur gerührt, worauf man bei 150 °C im Ölpumpenvakuum ca. 125 g unumgesetztes 2-tert.-Butylphenol abdestilliert.

Das rohe Reaktionsprodukt wird nun auf ca. 90 °C abgekühlt, und man läßt unter Rühren in den farblosen klaren Sirup 600 ml Isopropanol einlaufen. Aus der entstandenen wasserklaren Lösung beginnen bei ca. 50 °C weiße Kristallnadeln auszufallen. Man kühlt bis auf ca. 20 °C, rührt 30 Minuten nach und nutscht den Kristallbrei ab. Es wird sodann mit 300 ml Isopropanol nachgewaschen und 8 Stunden bei 40 °C im Vakuumtrockenschrank getrocknet. Ausbeute 301 g $\hat{=}$ 63 % d. Th. kristallisiertes Tris-(2-tert.-phenyl)-phosphit vom Fp. 70 bis 71 °C. Durch 1-maliges Umkristallisieren aus Isopropanol erhält man dünnschichtchromatographisch reines Phosphit vom Fp. 72,5 °C.

### Beispiel 2:

Das Rohphosphit wird wie in Beispiel 1 angegeben hergestellt. Nach dem Abdestillieren des überschüssigen 2-tert.-Butylphenols wird es auf ca. 90 °C abgekühlt und in 500 ml Methylglykol eingerührt. Aus der wasserklaren Lösung kristallisieren 311 g = 65 % d. Th. Tris-(2-tert.-butylphenyl)-phosphit in Form weißer Nadeln, die bei 68 bis 69 °C schmelzen. Durch Umkristallisation aus Methylglykol erhält man das reine Phosphit vom Fp. 72 °C.

0026893

Vergleichsbeispiele

Von einem analog Beispiel 1 hergestellten 2-tert.-Butylphenol-freien sirupösen Rohphosphit wurden jeweils 20 g bei ca. 60 °C mit 30 g der nachstehenden Lösungsmittel verrührt:

Hexan, Heptan, Toluol, Xylol, Ethylbenzol; Aceton, Methylethylketon, Diisobutylketon; Diethylether, Diisopropylether, Dioxan, Tetrahydrofuran; Methylacetat, Ethylacetat, Butylacetat, Amylacetat; Methylenchlorid, Chloroform, Tetrachlorkohlenstoff, Trichlorethylen.

Die gebildeten Lösungen bzw. Emulsionen blieben 3 Tage bei Raumtemperatur stehen, es wurde jedoch in keinem Falle eine Abscheidung von kristallinem Tris-(2-tert.-butylphenyl)-phosphit beobachtet.

0026893

<u>Patentansprüche</u>

1. Verfahren zur Herstellung von kristallisiertem Tris-(2-tert.-butylphenyl)-phosphit aus dem nach bekannten Syntheseverfahren anfallenden sirupösen Rohprodukt, <u>dadurch gekennzeichnet,</u> daß man dieses Rohprodukt mit einem bei Raumtemperatur flüssigen Alkohol behandelt.

2. Verfahren nach Anspruch 1, <u>dadurch gekennzeichnet,</u> daß das Gewichtsverhältnis von Rohphosphit zu Alkohol bei 1:1 bis 1:10 liegt.

3. Verfahren nach Anspruch 1 oder 2, <u>dadurch gekennzeichnet,</u> daß die Behandlung unter Rühren erfolgt.

Europäisches
Patentamt

**EUROPÄISCHER RECHERCHENBERICHT**

0026893
Nummer der Anmeldung

EP 80 10 5869

| Kategorie | EINSCHLÄGIGE DOKUMENTE | | KLASSIFIKATION DER ANMELDUNG (Int Cl.³) |
|---|---|---|---|
| | Kennzeichnung des Dokuments mit Angabe, soweit erforderlich, der maßgeblichen Teile | betrifft Anspruch | |
| D,X | DE - A - 2 606 358 (CIBA-GEIGY AG)<br><br>* Insgesamt, und besonders Seite 2, Mitte - Seite 4, Mitte, Seite 6, Mitte - Seite 7, oben *<br><br>-- | 1-3 | C 07 F 9/145//<br>C 08 K 5/52 |
| X | DE - A - 2 046 200 (PENNWALT CORP.)<br><br>* Seiten 7,8,10-13 *<br><br>-- | 1-3 | |
| X | DE - A - 2 056 555 (PENNWALT CORP.)<br><br>* Seiten 6,7,9,10,12 *<br><br>-- | 1-3 | RECHERCHIERTE SACHGEBIETE (Int. Cl.³) |
| X | US - A - 1 866 852 (C.N. HAND)<br><br>* Insgesamt *<br><br>-- | 1-3 | C 07 F 9/145 |
| P,X | GB - A - 2 027 713 (CIBA-GEIGY AG)<br><br>* Beispiele 1-5 *<br><br>---- | 1-3 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-12-1980 | BESLIER |

EPA form 1503.1 06.78